# EUROPEAN PATENT SPECIFICATION

(11) **EP 1 966 303 B1**
(45) Date of publication and mention of the grant of the patent: **07.03.2012**
(21) Application number: 06846744.8
(22) Date of filing: 21.12.2006
(51) Int. Cl.: C08L 27/22, C08L 21/00, B29C 41/18, C08L 27/06

(54) **Polymer skin made from an uncrosslinked alloy**
Polymerhaut auf Basis einer unvernetzten Zusammensetzung
Peau polymère à base d'une composition non réticulée

(30) Priority: 27.12.2005 US 754078 P
(43) Date of publication of application: 10.09.2008
(73) Proprietor: PolyOne Corporation, Avon Lake, OH 44012 (US)
(72) Inventor: HORTON, Stephen, Avon, Ohio 44011 (US); CASSATA, Brent, Findlay, Ohio 45840 (US)
(74) Representative: Winter, Brandl, Fürniss, Hübner, Röss, Kaiser, Polte - Partnerschaft
(86) International application number: PCT/US2006/062462
(87) International publication number: WO 2007/076429

(56) References cited:
- EP-B1- 1 322 703
- WO-A-02/094610
- JP-A- 9 029 872
- US-A- 4 234 703
- US-A- 5 270 381
- US-A1- 2004 054 085
- US-B1- 6 218 474
- US-B1- 6 797 779

## Description

### CLAIM OF PRIORITY

This application claims priority from U.S. Provisional Patent Application Serial Number 60/754,078 bearing Attorney Docket Number 12005015 and filed on December 27,2005, which is incorporated by reference.

### FIELD OF THE INVENTION

The present invention relates to a thermoplastic alloy of a polyvinyl halide, particularly polyvinyl chloride (PVC), and an elastomer that exhibits thermoplastic properties because it is not crosslinked.

### BACKGROUND OF THE INVENTION

U.S. Patent Application Publication 20040054085 (Tansey) describes a problem in the art of making instrument panel coverstocks that are designed to tear at specific locations in order to permit release of airbags from their compartments. Low temperatures can embrittle PVC or PVC alloys used as such coverstock for instrument panels, creating the possibility of fragments of coverstock causing injury to passengers during deployment of an airbag.

Tansey attempts to solve the embrittlement problem by dispersing a melt processible partially crosslinked rubber into a PVC matrix. However, the dispersion of a partially crosslinked rubber into a polymer does not assist the overall thermoplastic nature of the alloy. Indeed, a crosslinked elastomer, i.e., a rubber can inhibit melt processibility of the alloy during the formation of the final form of the thermoplastic product. Also, arubber can reduce the cold temperature performance of the alloy and elevate the melt viscocity of the polymer.

### SUMMARY OF THE INVENTION

The present invention solves the embrittlement problem without creating the problems associated with using crosslinked elastomers even those characterized as melt processible rubbers.

One aspect of the present invention is a slush molded article made from a thermoplastic alloy comprising poly(vinyl halide), plasticizer, and an olefin-based uncrosslinked elastomer having thermoplastic properties.

One advantage of the invention is that the thermoplastic alloy can be processed to form a polymeric skin using slush molding techniques.

### EMBODIMENTS OF THE INVENTION

Poly(Vinyl Halide)

Polyvinyl halides are polymers containing a vinyl moiety and one or more halides bonded thereto. Commercially accepted polyvinyl halides are poly(vinyl chloride) ("PVC") and chlorinated poly(vinyl chloride) ("CPVC") due to availability and cost.

PVC or CPVC are essentially homopolymers of vinyl chloride with minor amounts of other co-monomers, if any. CPVC is chlorinated CPVC where PVC containing approximately 57% chlorine is further reacted with chlorine radicals produced from chlorine gas dispersed in water and irradiated to generate chlorine radicals dissolved in water to produce CPVC, a polymer with a higher Tg and heat distortion temperature. Commercial CPVC typically contains by weight from about 58% to about 70% and preferably from about 63% to about 68% chlorine.

Poly(vinyl chloride) comprises polymerized vinyl chloride monomer where preferred polymers are essentially homopolymerized vinyl chloride with little or no copolymerized co-monomers. Useful co-monomers if desired include mono-unsaturated ethylenically unsaturated monomer copolymerizable with vinyl chloride monomer by addition polymerization. Useful co-monomers include other vinyl monomers such as vinyl acetate, ethers, and vinylidene chloride. Other useful co-monomers comprise monoethylenically unsaturated monomers including acrylics such as lower alkyl acrylates or methacrylates, acrylic and methacrylic acid, lower alkenyl olefins, vinyl aromatics such as styrene and styrene derivatives, and vinyl esters and ethers. Typical useful commercial co-monomers include acrylonitrile, 2-ethylhexyl acrylate, vinylidene chloride, and isobutyl ether. Useful PVC copolymers can contain from about 0.1 % to about 10% or 15%, preferably from about 0.5% to about 5%, by weight of copolymerized co-monomer.

Chlorinated PVC copolymers can be obtaincd by chlorinating such PVC copolymers using conventional methods such as that described in U.S. Pat. No. 2,996,489*.*

Preferred PVCs are suspension polymerized vinyl chloride although less preferred mass (bulk) polymerized can be useful.

The PVCs of this invention have a K-value from about 50 to about 90 and preferably from about 60 to about 80, as measured by using 0.2 grams of resin in 100 ml of cyclohexanone at 30° C by ASTM D 1243.

Plasticizer

The poly(vinyl halide) used in the present invention needs to be flexible. Plasticizers are added to poly(vinyl halide) to form flexible thermoplastic polymers. Any conventional plasticizer known to those skilled in the art for poly(vinyl halide) is suitable for use in the present invention. When PVC is used, the most common plasticizer is a phthalate plasticizer.

Non-limiting examples of plasticizers are a phthalate plasticizer (such as di-2-ethylhexyl phthalate, di-n-octyl phthalate, diisodecyl phthalate, dibutyl phthalate or dihexyl phthalate); a straight chain dibasic acid ester plasticizer (such as dioctyl adipate, or dioctyl sebacate); a trimellitate plasticizer; a polyester polymer plasticizer; an epoxy plasticizer (such as epoxidized soybean oil, epoxidized linseed oil or an epoxy resin); a phosphate plasticizer (such as triphenyl phosphate, trixylyl phosphate or tricresyl phosphate). These plasticizers can be used alone or in combination as a mixture of two or more of them.

Commercially available plasticizers are Palatinol 11P-E from BASF Corporation, Palatinol TOTM from BASF Corporation, Plas-chek 775 from Ferro Corporation, and Synplast NOTM from PolyOne Corporation

Uncrosslinked Elastomer Having Thermoplastic Properties

A partially or fully crosslinked thermoplastic elastomer is also known as a thermoplastic vulcanizate because the elastomer is partially or fully vulcanized, as is a thermoset rubber. Once vulcanization has occurred, there is less flexibility in processing the form of the thermoplastic vulcanizate because the vulcanizate has become thermoset.

Unlike the teaching of U.S. Patent Application Publication 20040054085, the present invention does not desire any crosslinking in the elastomer. Thus, the elastomer remains fully thermoplastic, exhibits thermoplastic properties, and is capable of multiple thermoplastic processing steps without complications associated with partial or full crosslinking of the material.

Uncrosslinked elastomers having thermoplastic properties are known in the thermoplastics industry and readily commercially available. Any olefinic elastomer that is capable of being melt blended with a poly(vinyl halide) to form an alloy is suitable for use in the present invention. One skilled in the art without undue experimentation can select an appropriate uncrosslinked elastomer, such as chlorinated polyethylene (CPE) elastomer, metalllocene-catalyzed ethylene-octene copolymer, or uncrosslinked ethylene propylene diene monomer terpolymer (EPDM). Also, without undue experimentation, one skilled in the art can determine other suitable uncrosslinked elastomers from the category of additives called impact modifiers, to the extent that such materials are olefinic, not crosslinked, elastomeric, yet processible as do thermoplastics.

A commercial example of an uncrosslinked chlorinated olefin elastomer is Duracryn 7160 NC from Advanced Polymer Alloys of Wilmington, Delaware, a division of Ferro Corporation of Cleveland, Ohio USA.

Optional Additives

The compound of the present invention can include conventional plastics additives in an amount that is sufficient to obtain a desired processing or performance properly for the compound. The amount should not be wasteful of the additive nor detrimental to the processing or performance of the compound. Those skilled in the art of thermoplastics compounding, without undue experimentation but with reference to such treatises as Plastics Additives Database (2004) from Plastics Design Library (www.williamandrew.com), can select from many different types of additives for inclusion into the compounds of the present invention.

Non-limiting examples of optional additives include adhesion promoters; biocides (antibacterial, fungicides, and mildewcides), anti-fogging agents; anti-static agents; bonding, blowing and foaming agents; dispersants; fillers and extenders; fire and flame retardants and smoke suppresants; impact modifiers; initiators; lubricants; micas; pigments, colorants and dyes; plasticizers; processing aids; release agents; silanes, titanates and zirconates; slip and anti-blocking agents; stabilizers; stearates; ultraviolet light absorbers; viscosity regulators; waxes; and combinations of them.

Table 1 shows acceptable and preferred ingredients for the alloys of the present invention.

| **Table I** | | | | |
|---|---|---|---|---|
| **Ingredient** | **Brand Name** | **Maker** | **Acceptable** | **Preferred** |
| Poly(Vinyl Halide) | Oxyvinyl 220F | Oxyvinyls | 25-50% | 30 - 40% |
| Plasticizer | Synplast NOTM | PolyOne | 20-45% | 30 - 40% |
| Uncrosslinked Elastomer | Duracryn 7160 NC | Advanced Polymer Alloys | 5-50% | 10 - 30% |

| **Table 1** | | | | |
|---|---|---|---|---|
| **Ingredient** | **Brand Name** | **Maker** | **Acceptable** | **Preferred** |
| Mixed Metal Stabilizer | CPS 507 | Amtine Chemicals | 0.5-2.5% | 1-2% |
| Internal Lubricant | AX-71 | Amfine Chemicals | 0.01-0.2% | 0.05-0.10% |
| Fatty Acid Ester | LS-10 | Amfine Chemicals | 0,01 - 0.2% | 0.05-0.10% |
| Phosphite Stabilizer | CPL-1551 | Amfine Chemicals | 0.2-2% | 0.5 - 1% |
| Pigment Dispersion | 642H V Dk Pewter MB | PolyOne Corporation | 0.1 - 5% | 0.5 -2.5% |
| Polyvinyl Chloride resin dispersion | Vinnolit P70 | Vinnolit | 0.5 - 5% | 2-5% |

Processing

The preparation of compounds of the present invention is uncomplicated. The compound of the present can be made in batch or continuous operations.

Mixing in a continuous process typically occurs in an extruder that is elevated to a temperature that is sufficient to melt the polymer matrix with addition either at the head of the extruder or downstream in the extruder of the solid ingredient additives of any optional additive. Extruder speeds can range from about 50 to about 500 revolutions per minute (rpm), and preferably from about 100 to about 300 rpm. Typically, the output from the extruder is pelletized for later extrusion or molding into polymeric articles.

In the present invention, it is desirable to dry-blend the PVC and other non-elastomeric ingredients before extruding the PVC and the uncrosslinked elastomer.

Mixing in a batch process typically occurs in a Banbury mixer that is also elevated to a temperature that is sufficient to melt the polymer matrix to permit addition of the solid ingredient additives of any optional additive. The mixing speeds range from 60 to 1000 rpm and temperature of mixing can be ambient. Also, the output from the mixer is chopped into smaller sizes for later extrusion or molding into polymeric articles.

Alternatively, mixing in a batch process typically occurs in a Henschel mixer that mixes via mechanical action rather than bringing the polymer matrix to a melting temperature. The mixing speeds range from 60 to 1000 rpm and temperature ofmixing can be ambient.

Alloys of the present invention can be also formed into powder, cubes, or pellets for further extrusion or molding into polymeric products.

Subsequent extrusion or molding techniques are well known to those skilled in the art of thermoplastics polymer engineering. Without undue experimentation but with such references as "Extrusion, The Definitive Processing Guide and Handbook"; "Handbook of Molded Part Shrinkage and Warpage"; "Specialized Molding Techniques"; "Rotational Molding Technology"; and "Handbook of Mold, Tool and Die Repair Welding", all published by Plastics Design Library (www.williamandrew.com). one can make articles of any conceivable shape and appearance using alloys of the present invention.

After extruding or other mixing, preferably, slush molding can be used to form useful articles from the alloys of the present invention. Slush molding utilizes an open-end mold design for forming articles (e.g., vehicle instrument panels) as a polymeric skin. One skilled in the art can understand the principles of slush molding by referring to U.S. Pat. No. 6,797,222 (Hausmann et al.) and U.S. Pat. No. 2,736,925; U.S. Pat. No. 3,039,146; European Patent Publication 0 339 222, European Patent Publication 0 476 742 and PCT Patent Publication WO 0207946.

Briefly, slush molding generally involves the following steps: a) an open-air tank is first filled with a suitable polymer powder in a sufficient quantity and with grain sizes typically below 500 micrometers; b) a mold, usually electroplated with nickel, is then heated to a given temperature; c) the tank and the mold are then coupled in a closed system with suitable coupling means; d) the system is moved so that the tank transfers the powder onto the mold, thus obtaining a uniform layer of partially or completely melted powder which adheres to the mold; e) the closed system is then opened after being brought to the initial conditions again; at this stage the possible excess polymer powder deposits again into the tank and can thus be regenerated; f) the mold can now be heated in order to complete the melting; g) the mold is then cooled with suitable cooling means; and h) the formed sheet is stripped off as a semifinished product which can then be assembled with a support in order to obtain the finished product in the form of instrument panels, and door panels for the upholstery of cars.

The alloys of the present invention are particularly suitable for use with slush molding processing techniques because the uncrosslinked elastomer allows for improved melt flow of the alloy, reducing the potential for pinholes and other processing defects during the formation of the polymeric skin.

### USEFULNESS OF THE INVENTION

Alloys of the present invention are particularly suitable for use with slush molding techniques to make thin polymeric film products for simulated leather, simulated cloth, and other goods used in residential and vehicular upholstery. For example, a "polymeric skin" can be formed using slush molding from alloys of the present invention. This polymeric skin has a very large aspect ratio of length or width to thickness and can mimic the shape of the mold to create random or repeating patterns of the appearance of grain in leather, wood, or other naturally-occurring items.

### EXAMPLES

A formulation of an alloy of the present invention as identified in Table 2 was made via slush molding using the processing parameters shown in Table 3, to yield a polymeric skin having the performance properties shown in Table 4.

| **Table 2** | | | |
|---|---|---|---|
| **Ingredient** | **Brand Name** | **Maker** | **Weight Percent** |
| Poly(Vinyl Halide) | Oxyvinyl 220F | Oxyvinyls | 37.0 |
| Plasticizer | Synplast NOTM | Synergistics | 35.1 |
| UncrosslinKed Elastomer | Duracryn 7160NC | Advanced Polymer Alloys | 20 |
| Mixed Metal Stabilizer | CPS 507 | Amfine Chemicals | 1,5 |
| Internal Lubricant | AX-71 | Amfine Chemicals | 0.3 |
| Fatty Acid Ester | LS-10 | Amfine Chemicals | 0.1 |
| Phosphite Stabilizer | CPL-1551 | Amfine Chemicals | 0.7 |
| Pigment Dispersion | 642H V Dk Pewter MB | PolyOne Corporation | 1.8 |
| Polyvinyl Chloride resin dispersion | Vinnolit P70 | Vinnolit | 3.7 |

| **Table 3** | | | |
|---|---|---|---|
| **Processing Conditions** | | | |
| Equipment | Henschel Mixer to Make PVC Dry Blend | Extruder | Mold Machine |
| Speed | 800 rpm, 550 rpm | 350 rpm | N/A |
| Order of Addition | Step 1. Add | Uncrosslinked | N/A |
| | Poly(vinyl halide), | Elastomer | |
| | Mixed Metal | and PVC Dry | |
| | Stabilizer, Internal | Blend added at | |
| | Lubricant, Fatty Acid | Throat | |
| | Ester, Phosphite | | |
| | stabilizer, Pigment | | |
| | dispersion | | |
| | Step 2. Add Plasticizer | | |
| | Step 3. Add PVC | | |
| | Resin Dispersion | | |
| Pre-Heat Temperature | N/A | Zone I: 275°C | N/A |
| | | Zone 2: 275°C | |
| | | Zone 3: 300°C | |
| | | Zone 4: 300°C | |
| | | Zone 5: 325C | |
| | | Zone 6: 325°C | |
| | | Zone 7: 325°C | |
| | | Zone 8: 325°C | |
| | | Zone 9: 330°C | |
| | | Zone 10: 330°C | |
| Final Melt Temperature | N/A | 200°C | 230°C |
| Dwell Time | N/A | N/A | 20 seconds |

| **Table 4** | | | |
|---|---|---|---|
| **Performance Properties** | | | |
| **Test** | **Result** | | |
| Elongalion, ASTM D638, 500 mm/min | 456% | | |
| Tensile, ASTM D638, 500 mm/min | 11.9 MPa | | |
| Specific Gravity, ASTM D792 | 1.188 | | |
| Hardness, Shore A, 15 Sec Delay, ASTM D1004 | 68 Shore A | | |
| Glass Transition Temperature, E" Based, DMA Analysis | -37.6°C | | |
| Xenon Arc Weatherometer, SAEJ1885 | 601.6kJ/m²-DE*=0.3 | 1240.8kJ/m²-DE*=0.2 | 1504 kJ/m²-DE*=0.3 |

The invention is not limited to the above embodiments. The claims follow.

## Claims

1. A polymer skin slush molded article made from a thermoplastic alloy comprising
poly(vinyl halide),
plasticizer, and
an olefin-based uncrosslinked elastomer having thermoplastic properties,
wherein the poly(vinyl halide) has a K-value of from 50 to 90 as measured using 0.2 grams of poly(vinyl halide) in 100 ml of cyclohexanone at 30°C.

2. The article of Claim 1,
wherein the poly(vinyl halide) comprises poly(vinyl chloride) or chlorinated poly(vinyl chloride),
wherein the poly(vinyl halide) is copolymerized with a co-monomer present in an amount ranging from about 0.1 to 15 percent by weight and selected from the group consisting of acrylonitrile, 2-ethylhexyl acrylate, vinylidene chloride, and isobutyl ether,
wherein the plasticizer comprises
(a) a phthalate plasticizer selected from the group consisting of di-2-ethylhexyl phthalate, di-n-octyl phthalate, diisodecyl phthalate, dibutyl phthalate and dihexyl phthalate;
(b) a straight chain dibasic acid ester plasticizer selected from the group consisting of dioctyl adipate and dioctyl sebacate;
(c) a trimellitate plasticizer;
(d) a polyester polymer plasticizer;
(e) an epoxy plasticizer selected from the group consisting of epoxidized soybean oil, epoxidized linseed oil and an epoxy resin;
(f) a phosphate plasticizer selected from the group consisting of triphenyl phosphate, trixylyl phosphate or tricresyl phosphate; and
(g) mixtures thereof.

3. The article of Claim 1,
wherein the elastomer is selected from the group consisting of chlorinated polyethylene elastomer, metallocene-catalyzed ethylene-octene copolymer, and uncrosslinked ethylene propylene diene monomer terpolymer, and
wherein the poly(vinyl halide) is present in an amount ranging from 25 to 50 weight percent of the article; the plasticizer is present in an amount ranging from 20 to 45 weight percent of the article; and wherein the uncrosslinked elastomer is present in an amount ranging from 5 to 50 weight percent of the article.

4. The article of Claim 1, further comprising adhesion promoters; biocides (antibacterials, fungicides, and mildewcides), anti-fogging agents; anti-static agents; bonding, blowing and foaming agents; dispersants; fillers and extenders; fire and flame retardants and smoke suppresants; impact modifiers; initiators; lubricants; micas; pigments, colorants and dyes; processing aids; release agents; silanes, titanates and zirconates; slip and anti-blocking agents; stabilizers; stearates; ultraviolet light absorbers; viscosity regulators; waxes; or combinations of them.

5. A method of making the article of Claim 1, comprising the steps of:
a) filling an open-air tank with a powder mixture of poly(vinyl halide), plasticizer, and an olefin-based uncrosslinked elastomer, wherein the poly(vinyl halide) has a K-value of from 50 to 90 as measured using 0.2 grams of poly(vinyl halide) in 100 ml of cyclohexanone at 30°C;
b) heating a mold to a temperature of 190°C - 240°C;
c) coupling the tank and the mold with a suitable coupling means;
d) moving the system so that the tank transfers the powder mixture onto the mold to obtain a layer of partially or completely melted powder which adheres to the mold;
e) opening the closed system;
f) heating the mold in order to complete the melting of the powder mixture to form a polymeric skin on the mold;
g) cooling the mold with suitable cooling means; and
h) removing the formed polymeric skin from the mold.

6. The process of Claim 5, wherein the poly(vinyl halide) is present in an amount ranging from 25 to 50 weight percent of the article; the plasticizer is present in an amount ranging from 20 to 45 weight percent of the article; and wherein the uncrosslinked elastomer is present in an amount ranging from 5 to 50 weight percent of the article.

7. A polymeric skin made by the process of Claim 5.

## Patentansprüche

1. Polymer-Slushhaut-Formkörper aus einer thermoplastischen Legierung, umfassend:
ein Poly(vinylhalogenid),
einen Weichmacher, und
ein olefinbasiertes unvernetztes Elastomer mit thermoplastischen Eigenschaften,
wobei das Poly(vinylhalogenid) einen K-Wert von 50 bis 90 hat, gemessen bei 30 °C mit 0,2 Gramm Poly(vinylhalogenid) in 100 ml Cyclohexanon.

2. Körper nach Anspruch 1,
wobei das Poly(vinylhalogenid) Poly(vinylchlorid) oder chloriertes Poly(vinylchlorid) umfasst,
wobei das Poly(vinylhalogenid) mit einem Comonomer compolymerisiert ist, das in einer Menge von ungefähr 0,1 bis 15 Gew.-% vorliegt und ausgewählt ist aus der Gruppe bestehend aus Acrylnitril, 2-Ethylhexylacrylat, Vinylidenchlorid und Isobutylether,
wobei der Weichmacher umfasst:
(a) einen Phthalatweichmacher ausgewählt aus der Gruppe bestehend aus Di-2-ethylhexylphthalat, Di-n-octylphthalat, Diisodecylphthalat, Dibutylphthalat und Dihexylphthalat;
(b) einen geradkettigen dibasischen Säureesterweichmacher ausgewählt aus der Gruppe bestehend aus Dioctyladipat und Dioctylsebacat;
(c) einen Trimellitatweichmacher;
(d) einen Polyesterpolymerweichmacher;
(e) einen Epoxidweichmacher ausgewählt aus der Gruppe bestehend aus epoxidiertem Sojabohnenöl, epoxidiertem Leinsamenöl und einem Epoxidharz;
(f) einen Phosphatweichmacher ausgewählt aus der Gruppe bestehend aus Triphenylphosphat, Trixylylphosphat und Tricresylphosphat; und
(g) Mischungen davon.

3. Körper nach Anspruch 1,
wobei das Elastomer ausgewählt ist aus der Gruppe bestehend aus chloriertem Polyethylenelastomer, metallocenkatalysiertem Ethylenoctencopolymer, und unvernetztem Ethylenpropylendienmonomerterpolymer, und
wobei das Poly(vinylhalogenid) in einer Menge von 25 bis 50 Gew.-% des Körpers vorliegt; der Weichmacher in einer Menge von 20 bis 45 Gew.-% des Körpers vorliegt; und wobei das unvernetzte Elastomer in einer Menge von 5 bis 50 Gew.-% des Körpers vorliegt.

4. Körper nach Anspruch 1, weiterhin umfassend Adhäsionspromotoren; Biozide (antibakterielle Mittel, Fungizide und Mittel gegen Schimmel); Antibeschlagmittel; Antistatikmittel; Haftvermittler, Treibmittel und Schaummittel; Dispergiermittel; Füller und Streckmittel; Feuer- und Flammschutzmittel und Rauchminderer; Schlagzähmodifizierer; Reaktionsstarter; Schmiermittel; Glimmer; Pigmente; Farbmittel und Farbstoffe; Verarbeitungshilfsstoffe; Trennmittel; Silane, Titanate und Zirkonate; Gleit- und Antiblockiermittel; Stabilisatoren; Stearate; UV-LichtAbsorber; Viskositätsregulatoren; Wachse oder Kombinationen davon.

5. Verfahren zum Herstellen des Körpers nach Anspruch 1, umfassend die Schritte:
a) Befüllen eines Freilufttanks mit einer Pulvermischung aus Poly(vinylhalogenid), Weichmacher und einem olefinbasierten unvernetzten Elastomer, wobei das Poly(vinylhalogenid) einen K-Wert von 50 bis 90 hat, gemessen bei 30 °C mit 0,2 Gramm Poly(vinylhalogenid) in 100 ml Cyclohexanon;
b) Erwärmen einer Form auf eine Temperatur von 190°C - 240 °C;
c) Verbinden des Tanks und der Form mit einem geeigneten Verbindungsmittel;
d) Bewegen des Systems, so dass der Tank die Pulvermischung auf die Form transferiert, um eine Schicht aus teilweise oder vollständig geschmolzenem Pulver zu erhalten, das an der Form haftet;
e) Öffnen des geschlossenen Systems;
f) Erwärmen der Form, um das Schmelzen der Pulvermischung zu vollenden, um eine polymere Haut auf der Form zu bilden;
g) Kühlen der Form mit geeigneten Kühlmitteln; und
h) Entfernen der geformten polymeren Haut von der Form.

6. Verfahren nach Anspruch 5, wobei das Poly(vinylhalogenid) in einer Menge von 25 bis 50 Gew.-% des Körpers vorliegt; der Weichmacher in einer Menge von 20 bis 45 Gew.-% des Körpers vorliegt; und wobei das unvernetzte Elastomer in einer Menge von 5 bis 50 Gew.-% des Körpers vorliegt.

7. Polymere Haut, hergestellt gemäß dem Verfahren nach Anspruch 5.

## Revendications

1. Article moulé par embouage en peau polymère réalisé à partir d'un alliage thermoplastique, comprenant :
un halogénure de (poly)vinyle,
un plastifiant, et
un élastomère non réticulé à base d'oléfine ayant des propriétés thermoplastiques, dans lequel l'halogénure de (poly)vinyle a une valeur K de 50 à 90, comme mesurée en utilisant 0,2 gramme d'halogénure de (poly)vinyle dans 100 ml de cyclohexanone à 30°C.

2. Article selon la revendication 1,
dans lequel l'halogénure de (poly)vinyle comprend du poly(vinyl chlorure) ou du poly(vinyl chlorure) chloré,
dans lequel l'halogénure de (poly)vinyle est copolymérisé avec un co-monomère présent dans une quantité allant d'environ 0,1 à 15 pour cent en poids et choisi dans le groupe constitué d'acrylonitrile, de 2-éthylhexyl acrylate, de chlorure de vinylidène, et d'isobutyléther,
dans lequel le plastifiant comprend
(a) un plastifiant de phtalate choisi dans le groupe constitué de di-2-éthylhexyl phtalate, de di-n-octyl-phtalate, de diisocédyl phtalate, de dibutylphtalate et de dihexyl-phtalate ;
(b) un plastifiant d'ester d'acide dibasique à chaîne droite choisi dans le groupe constitué de dioctyl-adipate et de dioctyl-sébacate ;
(c) un plastifiant de trimellitate ;
(d) un plastifiant de polymère de polyester ;
(e) un plastifiant époxy choisi dans le groupe constitué d'huile de soja époxydée, d'huile de lin époxydée et d'une résine époxy ;
(f) un plastifiant de phosphate choisi dans le groupe constitué de triphényl-phosphate, de trixylyl phosphate ou de tricrésyl phosphate ; et
(g) des mélanges correspondants.

3. Article selon la revendication 1,
dans lequel l'élastomère est choisi dans le groupe constitué d'un élastomère de polyéthylène chloré, d'un copolymère éthylène-octène catalysé en métallocène, et d'un terpolymère de monomère éthylène propylène diène non réticulé ; et
dans lequel l'halogénure de (poly)vinyle est présent dans une quantité comprise entre 25 et 50 pour cent en poids de l'article ; le plastifiant est présent dans une quantité comprise entre 20 et 45 pour cent de l'article ; et dans lequel l'élastomère non réticulé est présent dans une quantité comprise entre 5 et 50 pour cent en poids de l'article.

4. Article selon la revendication 1, comprenant en outre des promoteurs d'adhésion ; des biocides (antibactériens, fongicides et agents anti-moisissures), des agents anti-voile, des agents antistatiques ; des agents de liaison, de soufflage et de moussage ; des agents dispersants ; des charges et diluants ; des retardateurs de flammes et agents ignifuges et des suppresseurs de fumée ; des modificateurs d'impact ; des initiateurs, des lubrifiants, des micas ; des pigments, des colorants et couleurs ; des aides au traitement ; des agents de démoulage ; des silanes, titanates et zirconates ; des agents glissants et anti-bloquants ; des stabilisants ; des stéarates ; des absorbeurs d'ultra-violets ; des régulateurs de viscosité ; des cires ou des combinaisons correspondantes.

5. Procédé de réalisation de l'article selon la revendication 1, comprenant les étapes consistant à :
a) remplir un réservoir à air ouvert avec un mélange de poudre d'halogénure de (poly)vinyle, de plastifiant, et d'un élastomère non réticulé à base d'oléfine, dans lequel l'halogénure de (poly)vinyle a une valeur K de 50 à 90, comme mesurée en utilisant 0,2 gramme d'halogénure de (poly)vinyle dans 100 ml de cyclohexanone à 30°C ;
b) chauffer un moule à une température de 190°C - 240°C ;
c) raccorder le réservoir et le moule par un système de raccordement adapté ;
d) déplacer le système de sorte que le réservoir transfère le mélange de poudre sur le moule afin d'obtenir une couche de poudre partiellement ou totalement fondue qui adhère audit moule ;
e) ouvrir le système fermé ;
f) chauffer le moule afin de compléter la fusion du mélange de poudre, pour former une peau polymère sur le moule ;
g) refroidir le moule par des systèmes de refroidissement adaptés ; et
h) enlever la peau polymère formée du moule.

6. Procédé selon la revendication 5, dans lequel l'halogénure de (poly)vinyle est présent dans une quantité comprise entre 25 et 50 pour cent en poids de l'article ; le plastifiant est présent dans une quantité comprise entre 20 et 45 pour cent en poids de l'article ; et dans lequel l'élastomère non réticulé est présent dans une quantité comprise entre 5 et 50 pour cent en poids de l'article.

7. Peau polymère réalisée par le procédé de la revendication 5.
